# EUROPÄISCHE PATENTSCHRIFT

(11) **EP 4 286 731 B1**
(45) Veröffentlichungstag und Bekanntmachung des Hinweises auf die Patenterteilung: **18.11.2026**
(21) Anmeldenummer: 23196371.1
(22) Anmeldetag: 20.05.2020
(51) Int. Cl.: B08B 9/049, B08B 9/051, B08B 9/055, F01D 25/16, F01D 1/26, F03B 13/00, F03B 3/04, F16L 55/32, F16L 55/48, G01N 23/223, F01D 15/04, F16L 101/12, F16L 101/30

(54) **STOP & GO-MOLCH**
STOP & GO PIG
RACLEUR STOP & GO

(30) Priorität: 20.05.2019 DE 102019113385
(43) Veröffentlichungstag der Anmeldung: 06.12.2023
(62) Dokumentnummer(n) der früheren Anmeldung(en) nach Art. 76 EPÜ: 20732501.0 / 3 973 221
(73) Patentinhaber: Rosen IP AG, 6370 Stans (CH)
(72) Erfinder: Grote, Matthias, 49811 Lingen (DE); Nee, Ingo, 26892 Dörpen (DE)
(74) Vertreter: Völler-Blumenroth, Johannes Florian

(56) Entgegenhaltungen:
- EP-B1- 1 171 733
- CN-A- 109 058 650
- US-A1- 2015 252 684

## Beschreibung

Die vorliegende Erfindung betrifft einen Molch zur Verwendung in mit einem strömenden Fluid gefüllten Rohrleitungen, umfassend einen Molchkörper, ein an dem Molchkörper angeordnetes, durch das strömende Fluid in Rotation versetzbares Antriebselement, vorzugsweise einen Propeller, eine mit dem Antriebselement in Verbindung stehende Generatoreinheit, durch die eine Bewegung des Antriebselementes in elektrische Energie umwandelbar ist, und ein Festlegemittel, über das die Position und/oder die Geschwindigkeit des Molches in der Rohrleitung festlegbar ist.

Derartige Molche werden beispielsweise als Inspektionsmolche oder als Reinigungsmolche zum Überprüfen oder zum Reinigen von Rohrleitungen eingesetzt, wobei es sich bei den Rohrleitungen um Rohrleitungen für den Transport von Erdgas, Erdöl oder Erdölprodukten, Wasser oder ähnliches handelt. Im einfachsten Fall werden derartige Molche durch das in der Rohrleitung strömende Fluid durch die Pipeline bewegt. Die Molche sind hierzu typischerweise mit einer Anzahl an Dichtungselementen, beispielsweise verformbare Scheiben aus einem Elastomer wie Polyurethan versehen. Die Dichtungselemente liegen an der Innenwand der Rohrleitung an. Die Bewegungsgeschwindigkeit derartiger Molche ist somit von der Durchflussgeschwindigkeit des Fluids durch die Rohrleitung abhängig.

Es sind verschiedene Varianten vorgeschlagen worden, um den Transport eines Molches durch eine Rohrleitung weniger stark von der Durchflussgeschwindigkeit des Mediums in der Rohrleitung abhängig zu machen.

Die EP 1 171 733 B1 zeigt beispielsweise einen Molch, bei dem eine Turbine durch das in der Rohrleitung strömende Fluid in Rotation versetzt wird und diese Rotation der Turbine für den Antrieb von an der Innenwand der Rohrleitung anliegenden Rädern verwendet wird. Über diese Räder wird der Molch in der Rohrleitung bewegt.

Aus der US 2015/0252684 A1 ist ein weiterer Molch bekannt, bei dem eine Turbine durch das in der Rohrleitung strömende Fluid in Rotation versetzt wird, um innerhalb der Rohrleitung elektrische Energie bereitzustellen. Der von der Turbine zur Stromerzeugung angetriebene Generator kann auch als Motor verwendet werden, um den Start der Turbine zu erleichtern. Der Generator ist außen an der Turbine angeordnet. Die Turbine ist an einem Minimalquerschnitt eines durch den Molch führenden Kanals angeordnet.

Aus der CN109058650A ist ein Unterwasser-Roboter zur Inspektion von unter Wasser angeordneten Rohrleitungen bekannt, der eingerichtet ist, sich unter Wasser auf einem vorgebaren Pfad zu bewegen und Aufnahmen von einer unter Wasser angeordneten Rohrleitung zu machen.

Aufgabe der vorliegenden Erfindung ist es, einen derartigen Molch weiterzuentwickeln.

Der erfindungsgemäße Molch weist eine Generatoreinheit auf, die zum Betrieb als Motor ausgebildet ist. Die als Motor betreibbare Generatoreinheit ist so ausgebildet, dass diese das Antriebselement in Rotation versetzen kann, wobei das Antriebselement so ausgebildet ist, dass hierüber eine von der Strömungsgeschwindigkeit des in der Rohrleitung strömenden Fluids verschiedene Geschwindigkeit des Molches einstellbar ist. Hierzu weist der Molch einen mit der Generatoreinheit verbundenen Energiespeicher für elektrische Energie auf. Dieser stellt die nötige Energie zur Verfügung, um das Antriebselement in Rotation zu versetzen.

Ein derart ausgebildeter erfindungsgemäßer Molch kann zunächst wie ein oben beschriebener einfacher Molch von der Fluidströmung passiv durch die Rohrleitung transportiert werden. Die als Motor fungierende Generatoreinheit kann das Antriebselement in Rotation versetzen, wodurch der Molch beispielsweise relativ zu der Pipelinewand verlangsamt wird. Anschließend kann ein Festlegemittel die Position des Molches in der Rohrleitung festlegen. Dieses kann beispielsweise mit der Innenwand der Rohrleitung in Kontakt gebracht werden. Bei dem Festlegemittel kann es sich um Mittel handeln, die den Molch relativ zu der Pipelinewand festlegen, diesen gleichsam in der Pipeline verklemmen. Es kann aber auch ein Mittel sein, das den Molch gezielt an der Innenwand der Pipeline entlang bewegen kann. Beispielsweise kann ein solches Festlegemittel Räder oder Kettenlaufwerke aufweisen, die antreibbar, zumindest jedoch abbremsbar sind. Die Geschwindigkeit eines Molches in der Pipeline kann beispielsweise auch über eine Wirbelstrombremse oder mit der Pipeline in Kontakt stehende Dichtungselemente des Molches, insbesondere über Dichtungselemente deren Anpressdruck gegenüber einer Pipelinewand einstellbar ist, reguliert werden.

Ein erfindungsgemäßer Molch kann somit zunächst zügig durch die Pipeline transportiert werden. Durch das in Rotation versetzbare Antriebselement, das auf das in der Pipeline strömende Fluid wirkt, kann der Molch dann relativ zur Rohrleitungswand abgebremst werden, ohne einen zusätzlichen Verschleiß der Rohrleitungswand und/oder eines Brems- beziehungsweise Festlegemittels des Molches. Der Molch kann in diesem Sinne verschleißfrei abgebremst werden. Über das Festlegemittel kann der Molch dann an einer bestimmten Stelle in der Pipeline festgelegt oder mit einer definierten Geschwindigkeit an der Pipelinewandung vorbeigeführt werden. Hierdurch können Inspektionen der Pipeline zuverlässiger durchgeführt werden. Es können Pipelineinspektionsverfahren zum Einsatz kommen, deren Einsatz auf herkömmlichen Inspektionsmolchen aufgrund von hohen Messzeiten bisher nicht oder nur mit hohem Aufwand möglich ist. Weiterhin ist es denkbar, einen derartigen Molch für Reparaturarbeiten in einer Pipeline einzusetzen, bei denen er für eine längere Zeit an einer bestimmten Stelle in der Pipeline verharren muss.

Arbeiten, die mit einem für eine längere Zeit an einer Stelle in der Rohrleitung verbleibenden Molch besonders einfach durchgeführt oder durch so einen Molch überhaupt erst ermöglich werden sind insbesondere die Reparatur von Schadstellen insbesondere durch Ausschleifen und Versiegeln von Rissen, durch Auftragsschweißen, lokalen 3D-Druck, Applikation und Aushärten bzw. Aushärten lassen von Kunststoffharzen oder durch Applikation von Patches aus faserverstärkten Kunststoffen, eine lokale mechanische Bearbeitung, insbesondere das Schleifen einer Nahtstelle oder der nachträgliche Einbau von Installationen in die Pipeline wie Sensoren oder Ventilen. Zu diesen Zwecken kann der Molch mit Werkzeugen wie einem Scheißgerät, einer Klebeeinrichtung, einem Bohrer, einem Schleifer, einem Applikator und/oder einem Manipulator versehen sein.

Wenn der Molch über das Festlegemittel relativ zur Rohrleitung festgelegt ist, das heißt entweder stationär ist oder mit einer bestimmten Geschwindigkeit an der Rohrleitung vorbeigeführt wird, kann die Generatoreinheit als Generator fungieren, wobei sie über das Antriebselement angetrieben wird. Das Antriebselement wird hierbei durch an dem Molch vorbeiströmendes Fluid in der Rohrleitung angetrieben. Das in der Pipeline strömende Fluid kann hierbei außen an einem Molchkörper vorbeiströmen. Der Molch kann aber auch einen Bypass im Inneren des Molchkörpers für eine Fluidströmung aufweisen. In Fall ist das Antriebselement in dem Bybass oder in einer durch den Bybass geführten Fluidströmung vor oder nach dem Molch angeordnet. Der festgelegte Molch kann somit die Energie des in der Rohrleitung strömenden Fluids anzapfen, um elektrische Energie für beispielsweise eine Messeinrichtung und/oder Reparatureinrichtung bereitzustellen, die am erfindungsgemäßen Molch angeordnet ist.

Der erfindungsgemäße Molch weist somit ein Antriebselement auf, das einerseits geeignet ist durch eine als elektrischer Motor fungierende Generatoreinheit angetrieben zu werden und den Molch relativ zu einem in der Rohrleitung strömenden Fluid zu bewegen, vorzugsweise in der Rohrleitung zu verlangsamen. Andererseits ist das Antriebselement ausgebildet durch das an einem Molch in einem festgelegten Zustand vorbeiströmende Fluid in Rotation versetzt zu werden und über die nunmehr als Generator fungierende Generatoreinheit elektrische Energie für elektrische Systeme, die an dem Molch angeordnet sind, bereitzustellen. Dies ist besonders interessant für Molche, die für lange Zeiträume in einer Rohrleitung verbleiben und/oder zumindest ein sehr energieintensives Bauelement wie einen Aktor und/oder einen energieintensiven Sensor wie etwa einen Sensor für eine Röntgenfluoreszenzanalyse oder eine Anordnung zur Durchführung einer Atomemissionsspektroskopie (AES), insbesondere eine Laserinduzierte Plasmaspektroskopie (LIBS), aufweisen. Ein entsprechendes in Rotation versetzbares Antriebselement ist vorzugsweise als Verstellpropeller ausgebildet. Hierbei handelt es sich um einen Propeller, bei dem der Einstellwinkel der einzelnen Propellerblätter variabel ist. Der Anstellwinkel der Propellerblätter kann an verschiedene Betriebssituationen, vorliegt also insbesondere an den Betrieb als Antrieb für den Molch und den Betrieb als Antrieb für den Generator, angepasst werden.

Weiterhin weist der Molch die üblichen für einen Betrieb notwendigen Komponenten wie zum Beispiel eine Steuerelektronik zur Ansteuerung der elektrischen und/oder elektronischen Komponenten auf. Weiterhin kann der Molch einen Datenspeicher zur zumindest temporären Speicherung von Daten eines Sensors sowie Mittel zum Übermitteln und/oder Austausch von Daten aufweisen. Weiterhin kann der Molch eine Auswerteeinheit für die Auswertung von Sensordaten aufweisen. Diese Mittel umfassen die üblichen Komponenten einer elektronischen Datenverarbeitungsanlage wie einen Speicher und eine zentrale Recheneinheit.

Erfindungsgemäß weist der Molch eine auswechselbare Arbeitseinheit auf, die den Molchkörper zumindest mit ausbildet und über die der Molch mit unterschiedlichen Sensoren und/oder Aktoren ausgestattet werden kann. Der erfindungsgemäße Molch umfasst mehrere unterschiedliche Arbeitseinheiten, die unterschiedliche Sensoren aufweisen. Erfindungsgemäß handelt es sich bei den Sensoren um einen Ultraschallsensor und/oder EMAT Sensor und/oder magnetischen Flusssensor. Eine Arbeitseinheit kann zusätzlich oder stattdessen auch Reinigungselemente wie beispielsweise Bürsten aufweisen. Eine alternative Arbeitseinheit kann einen Manipulator beispielsweise in Form eines Roboterarms aufweisen, mit dem Reparaturarbeiten durchgeführt werden können. Somit kann der Molch je nach Einsatzzweck mit unterschiedlichen Arbeitseinheiten ausgestattet werden. Vorzugsweise ist die Arbeitseinheit an einem Ende des Molchkörpers angeordnet, so dass diese besonders einfach zugänglich und auswechselbar ist. Besonders bevorzugt ist die Arbeitseinheit an einem dem Antriebselement gegenüberliegenden Ende des Molchkörpers angeordnet. Somit ist die auswechselbare Arbeitseinheit besonders einfach zugänglich und auswechselbar. Die auswechselbare Arbeitseinheit nimmt hierbei vorzugsweise eine strömungsgünstige Formgebung des Molchkörpers auf.

Bevorzugt ist der Molchkörper so gestaltet, dass die Querschnittsflächen quer zu einer Längsmittelachse des Molchkörpers im Bereich der jeweiligen Enden des Molchkörpers kleiner sind als zumindest eine Querschnittfläche in einem zwischen den Enden befindlichen Abschnitt des Molchkörpers. Durch die Veränderung der Querschnittsflächen des Molchkörpers entlang seiner Längserstreckung weist der Molchkörper eine strömungsgünstige Formgebung auf. Die Enden des Molchkörpers sind jeweils schmaler als die Mitte des Molchkörpers. Besonders bevorzugt ist der Molchkörper rotationssymmetrisch, insbesondere tropfenförmig ausgebildet. Dies führt zu einer besonders strömungsgünstigen Anordnung, die die Strömung des in der Rohrleitung strömenden Fluids möglichst wenig stört. Die auf den Molch wirkenden Kräfte, die das Festlegemittel aufnehmen und in die Rohrleitungswand einleiten muss, werden somit reduziert.

Vorzugsweise ist das Antriebselement außerhalb des Molchkörpers an einem Ende des Molchkörpers so angeordnet, dass es durch außen am Molchkörper vorbeiströmendes Fluid in Rotation versetzbar ist. Hierdurch kann das Antriebselement größer gebaut werden, als wenn es im Molchkörper selbst angeordnet ist. Zudem steht im Molchkörper mehr Raum zur Verfügung für beispielsweise den Energiespeicher und die Generatoreinheit und/oder der Molchkörper kann kleiner beziehungsweise schmaler gebaut werden, wodurch das in der Rohrleitung strömende Fluid weniger gestört wird und die auf den Molch wirkenden Kräfte reduziert werden.

Vorzugsweise weist der Molch ein zweites in Rotation versetzbares Antriebselement auf, wobei das erste und das zweite Antriebselement zum Betrieb mit gegenläufigen Drehrichtungen ausgebildet sind. Durch die Verwendung von zwei gegenläufig drehenden Antriebselementen können die durch die jeweiligen Antriebselemente auf den Molch einwirkenden Drehmomente kompensiert werden. Bei einer geschickten Auswahl der Antriebselemente beziehungsweise der Drehzahlen heben sich die durch die Antriebselemente eingeleiteten Drehmomente vollständig auf. Die räumliche Orientierung des Molches in der Rohrleitung bleibt konstant. Zumindest jedoch werden die Belastungen auf das Festlegemittel reduziert, das gegebenenfalls entstehende Drehmomente in die Rohrleitungswand einleiten muss. Die beiden Antriebselemente können nebeneinander, koaxial voneinander beabstandet oder unmittelbar hintereinander angeordnet sein.

Besonders bevorzugt weist der Molch einen gegenläufigen Doppelpropeller auf. Ein solcher gegenläufiger Doppelpropeller weist ein erstes und zweites Antriebselement auf, die im Betrieb gegenläufige Drehrichtungen aufweisen. Hierbei wird die unterschiedliche Drehrichtung typischerweise durch ein Umlaufrädergetriebe realisiert, durch das automatisch eine Kompensation der durch das jeweilige Antriebselement auf den Molch ausgeübten Drehmomente erfolgt. Ein solcher Doppelpropeller kann von einer als Motor fungierenden Generator-Einheit angetrieben werden. Ein solcher gegenläufiger Doppelpropeller erlaubt somit einen drehmomentfreien Betrieb des Molches. Vorzugsweise sind die in Rotation versetzbaren Antriebselemente ist als Verstellpropeller ausgebildet. Hierbei kann der Einstellwinkel der Propellerblätter auf jedem der beiden Antriebselemente eingestellt und der Anstellwinkel der Propellerblätter insbesondere an den Betrieb als Antrieb für den Molch und den Betrieb als Antrieb für den Generator angepasst werden.

Vorzugsweise ist das Antriebselement von einem Mantelelement umgeben. Ein solches Mantelelement schützt das Antriebselement bei einem Transport eines erfindungsgemäßen Molches vor Beschädigung. Auch beim Einsatz in einer Rohrleitung kann ein derartiges Mantelelement verhindern, dass Teile des Antriebselementes beispielsweise mit der Rohrleitungswand in Kontakt kommen und so gegebenenfalls beschädigt werden. Besonders bevorzugt ist an dem Mantelelement eine Führungsscheibe angeordnet. Derartige Führungsscheiben finden bei herkömmlichen Molchen Verwendung, um diese in der Rohrleitung zu positionieren. Die Führungsscheibe steht hierbei mit der Rohrleitungswand in Kontakt und weist einen Durchmesser auf, der nur geringfügig kleiner als der Innendurchmesser der Rohrleitung ist. Bei der Ausführung als flexibles Dichtelement kann der Durchmesser der Führungsscheibe auch geringfügig größer als der Innendurchmesser der Rohrleitung sein und somit beim Betrieb in der Rohrleitung an dieser anliegen. Die Anordnung einer entsprechenden Führungsscheibe an dem Mantelelement ist besonders vorteilhaft, wenn der Molchkörper von dem in der Rohrleitung strömenden Fluid umströmt werden soll. In diesem Fall kann eine entsprechende Führungsscheibe nicht an dem Molchkörper direkt angebracht sein, da hierdurch eine Umströmung des Molchkörpers verhindert werden würde.

Bevorzugt ist an dem Mantelelement eine Messplatte angeordnet. Bei einer derartigen Messplatte handelt es sich im Grunde um eine Führungsscheibe, die mit Messtechnik ausgestattet ist. Die Messtechnik misst hierbei Kräfte beziehungsweise Verformungen der Scheibe, wie sie beispielsweise beim Passieren von Schweißnähten in der Rohrleitung auftreten. Im Bereich von Schweißnähten ist der Innendurchmesser der Rohrleitung typischerweise verkleinert, so dass es zu einer Verformung der entsprechenden Führungsscheibe kommt.

Besonders bevorzugt sind an dem Mantelelement zwei voneinander beabstandete Führungsscheiben und/oder Messplatten angeordnet. Hierdurch wird die Führung des Molches in der Rohrleitung verbessert. Insbesondere kann somit verhindert werden, dass der Molchkörper mit der Rohrleitungswand in Kontakt kommt.

Vorzugsweise weist der Molch eine Sensoranordnung auf. Mit Hilfe dieser Sensoranordnung kann die Pipeline beispielsweise auf Risse, Korrosionsschäden, Verformungen und/oder andere Beschädigungen untersucht werden. Besonders bevorzugt ist die Sensoranordnung an der auswechselbaren Arbeitseinheit angeordnet.

Bevorzugt umfasst die Sensoranordnung einen Sensor für Röntgenfluoreszenzanalysen und/oder eine Anordnung zur Durchführung einer Atomemissionsspektroskopie (AES), insbesondere eine Laserinduzierte Plasmaspektroskopie (LIBS). Über eine Röntgenfluoreszenzanalyse und/oder AES kann die Materialzusammensetzung einer Rohrleitungswand bestimmt werden. Durch einen mit einem derartigen Sensor ausgestatteten Molch kann auch nachträglich noch eine Bestimmung der verwendeten Rohrleitungsmaterialien erfolgen. Somit kann überprüft werden, ob die jeweiligen Abschnitte der Rohrleitung aus den richtigen Materialien erstellt wurden, oder ob bei einem Austausch oder bei einer Reparatur der Pipeline die richtigen Materialien verwendet wurden. Ein Sensor zur Röntgenfluoreszenzspektroskopie und/oder AES, insbesondere LIPS, kann auf herkömmlichen Pipelineinspektionsmolchen nicht verwendet werden, da die notwendigen Messzeiten im Vergleich zu den üblichen Inlinemessverfahren lang sind und der Sensor sich während der Messung an derselben Stelle der Rohrleitungswand befinden muss. Eine solche Messung kann auf durch die Rohrleitung bewegten Molchen nur mit sehr großem konstruktivem Aufwand realisiert werden. Ein erfindungsgemäßer Molch kann jedoch wiederholt in einer Rohrleitung relativ zu der Rohrleitungswand zum Stehen kommen und eine entsprechende Messung durchführen.

Da der Röntgenfluoreszenzsensor und/oder die Anordnung zur Durchführung einer Atomemissionsspektroskopie (AES) eine saubere Oberfläche benötigt, kann dieser in einer Sensoraufnahme angebracht sein, die an der Rohrleitungswand gegenüber dem in der Rohrleitung strömenden Fluid abdichtbar ist. Vorzugsweise kann das Fluid aus dem abdichtbaren Raum in der Sensoraufnahme evakuiert werden. Alternativ kann der Molch zwei in Längsrichtung voneinander beabstandete Dichtungselemente aufweisen, die mit der Rohrleitungswand in Kontakt bringbar sind und mit dieser einen entsprechend abgedichteten Raum aufweisen. Der Röntgenfluoreszenzsensor und/oder eine Anordnung zur Durchführung einer AES kann in diesem abgedichteten Raum angeordnet werden. Die Verwendung von zwei voneinander beabstandet angeordneten Dichtungselementen mit einem erfindungsgemäßen Molch kann durch einen Bypass konstruktiv erleichtert werden.

Vorzugsweise ist das Festlegemittel bei der Verwendung des Molches in der Rohrleitung in Richtung der Rohrleitungswand bewegbar. Hierdurch kann das Festlegemittel bei dem Transport des Molches durch das in der Rohrleitung strömende Fluid außer Eingriff mit der Rohrleitungswand stehen. Der Verschleiß an dem Festlegemittel wird somit beim Transport des erfindungsgemäßen Molches in der Rohrleitung vermindert. Erst wenn der Molch über die Wirkung des Antriebselements ausreichend in der Rohrleitung verlangsamt wurde, wird das Festlegemittel in Richtung der Rohrleitungswand bewegt, wobei es mit dieser in Kontakt kommt und den Molch abbremst oder in der Rohrleitung festlegt. Besonders bevorzugt ist das Festlegemittel klappbar an dem Molchkörper angeordnet. Hierdurch wird eine einfache Bewegung des Festlegemittels zur Rohrleitungswand ermöglicht. Besonders bevorzugt ist das Festlegemittel mit einer gegen die Strömungsrichtung des in der Rohrleitung strömenden Fluids gerichteten Bewegungskomponente in Richtung der Rohrleitungswand klappbar. Hierdurch kann bei geeigneter Auslegung das Festlegeelement so ausgestaltet werden, dass eine durch das strömende Fluid auf den Molch ausgeübte Kraft zu einer Verstärkung der Haltekräfte des Festlegemittels an der Rohrleitungswand führt.

Vorzugsweise weist der Molch mindestens zwei Festlegemittel auf, die angeordnet sind eine Kraft in unterschiedliche Richtungen auf die Rohrleitungswand aufzubringen. Bei einer geraden Anzahl von Festlegemitteln sind diese bevorzugt bezogen auf eine Längsmittelachse des Molches jeweils paarweise gegenüberliegend angeordnet. Hierdurch wird eine gleichmäßige Krafteinleitung an unterschiedlichen Stellen der Rohrleitungswand ermöglicht. Der Molch wird besonders zuverlässig in der Rohrleitung gehalten, wobei die Gefahr von Beschädigungen der Rohrleitungswand durch die Haltemittel reduziert wird.

Bevorzugt ist das Festlegemittel über eine Getriebespindel in Kontakt mit der Rohrleitung bringbar. Ein Getriebe mit einer Getriebespindel ist durch die längliche Ausdehnung besonders einfach in einen Molch, der typischerweise ebenfalls eine längliche Ausdehnung aufweist, einbringbar. Hierdurch wird ein einfacher und platzsparender Antrieb für die Bewegung eines Festlegemittels realisiert. Besonders bevorzugt ist die Getriebespindel selbsthemmend. Somit ist es nicht notwendig, eine Bremse oder eine weitere Aufbringung einer Kraft auf das Festlegemittel oder die Getriebespindel vorzusehen, um ein in Kontakt mit der Rohrleitung gebrachtes Festlegemittel in dieser Position zu halten.

Vorzugsweise weist ein erfindungsgemäßer Molch eine Positioniereinheit zur Positionierung des Molchs in einer Pipeline auf. Eine solche Positioniereinheit kann beispielsweise ein Odometer zur Erfassung der in der Rohrleitung zurückgelegten Distanz aufweisen. Alternativ oder zusätzlich kann eine Positioniereinheit eine Schweißnahterkennung zur Erkennung von umlaufenden Schweißnähten aufweisen. Insbesondere bei Rohrleitung, die als Pipelines in der Öl- und Gasindustrie verwendet werden, werden die einzelnen Abschnitte einer Pipeline und/oder die die einzelnen Abschnitte verbindenden umlaufenden Schweißnähte dokumentiert. Die die einzelnen Abschnitte einer Pipeline verbindenden umlaufenden Schweißnähte können über die Schweißnahterkennung erfasst werden. Ein mit einer solchen Schweißnahterkennung ausgestatteter Molch kann hierüber die einzelne Rohrleitungsabschnitte erkennen und zählen und so seine Position in der Pipeline bestimmen. Besonders interessant ist dies, wenn eine Untersuchung jedes einzelnen Rohrleitungsabschnitts durchgeführt werden soll. Der Molch kann somit nach der Detektion einer umlaufenden Schweißnaht eine oder mehrere Messungen durchführen. Hierdurch wird sichergestellt, dass jeder Rohrleitungsabschnitt untersucht wird. Alternativ oder zusätzlich kann die Positionsbestimmungseinheit eine Empfangseinheit für durch die Pipelinewand von außen gesendete Positioniersignale aufweisen. Derartige Positioniersignale können beispielsweise Signale von außen an einer Rohrleitung angebrachten Leitsendern oder ein zu einem bestimmten Zeitpunkt eingebrachtes Stoppsignal sein. Durch die Positioniereinheit kann die Position ermittelt werden, an der ein erfindungsgemäßer Molch zum Stillstand kommen soll, beziehungsweise die Schritte zu seinem Abbremsen in der Rohrleitung über das Antriebselement und die Festlegung über das Festlegemittel eingeleitet werden.

Weiterhin betrifft die Erfindung ein Verfahren zum Betrieb eines Molchs mit einem Antriebselement in einer Rohrleitung, wobei der Molch in eine mit einem strömenden Fluid gefüllte Rohrleitung eingebracht und durch die Rohrleitung transportiert wird. In der Rohrleitung wird der Molch über ein auf das strömende Fluid wirkendes Antriebselement des Molches bewegt, insbesondere abgebremst. Dadurch, dass das Antriebselement auf das strömende Fluid und insbesondere nicht über Reibung auf die Rohrleitungsinnenwand wirkt, wird der Molch quasi verschleißfrei, das heißt ohne einen zusätzlichen, durch den Bremsvorgang bewirkten Verschleiß verlangsamt. Somit kann ein Molch mehrfach wiederholt in einer Rohrleitung verlangsamt werden, ohne dass am Molch und/oder an der Rohrleitungswand zusätzliche Verschleißerscheinungen auftreten. Dies ist besonders wertvoll für Verfahren, bei denen der Molch an einer Vielzahl von Stellen in einer Rohrleitung abgebremst werden soll.

Bevorzugt wird der Molch in der Rohrleitung festgelegt. In dem festgelegten Zustand, in dem der Molch sich nicht, zumindest jedoch mit einer Geschwindigkeit, die geringer ist als die Strömungsgeschwindigkeit des in der Rohrleitung strömenden Fluids, an der Rohrleitungswand entlang bewegt, wird das Antriebselement des Molches durch das strömende Fluid bewegt und die Bewegung in elektrische Energie umgewandelt. Hierdurch wird der Molch mit elektrischer Energie versorgt, die aus der Bewegungsenergie des in der Pipeline strömenden Fluids gewonnen wird. Der Molch kann somit für eine längere Zeit in einer Rohrleitung eingesetzt werden, als wenn die Energieversorgung über mitzuführende Energiespeicher erfolgt bzw. es kann ein kleinerer und leichterer Molch in dem Verfahren verwendet werden, was möglichen Verschleiß am Molch oder in der Rohrleitung weiter reduziert.

Vorzugsweise kommt der Molch in der Rohrleitung relativ zu der Rohrleitung zum Stillstand und es werden Wartungs- und/oder Inspektionsarbeiten, insbesondere Messungen der Materialzusammensetzung der Rohrleitung mittels Röntgenfluoreszenzanalyse und/oder AES durchgeführt. Mit diesem Verfahren können Arbeiten im Rahmen einer Inlineinspektion einer Rohrleitung mittels eines Molches durchgeführt werden, bei denen der Molch längere Zeit ein einer bestimmten Stelle in der Rohrleitung verbleiben muss. Hierdurch können gegebenenfalls Arbeiten entfallen, für die einen Zugang zur Rohrleitung von außen erforderlich wäre.

Weitere Vorteile und Einzelheiten der Erfindung können der nachfolgenden Figurenbeschreibung entnommen werden. Schematisch dargestellt zeigt:
- Fig. 1: einen erfindungsgemäßen Molch in einer isometrischen Ansicht schräg von vorne,
- Fig. 2: den Molch nach Fig. 1 aus einer Ansicht schräg von hinten,
- Fig. 3: einen Querschnitt durch einen Molch gemäß Fig. 1,
- Fig. 4: einen Ausschnitt eines Molches gemäß Fig. 1,
- Fig. 5: einen erfindungsgemäßen Molch mit einer Arbeitseinheit umfassend einen Manipulator,
- Fig. 6: eine auswechselbare Arbeitseinheit zur Verwendung mit einem erfindungsgemäßen Molch mit Sensoranordnungen,
- Fig. 7: eine auswechselbare Arbeitseinheit zur Verwendung mit einem erfindungsgemäßen Molch mit Reinigungselementen.

Einzelne Merkmale der nachfolgend beschriebenen Ausführungsbeispiele können in Kombination mit den Merkmalen der unabhängigen Ansprüche auch zu erfindungsgemäßen Weiterbildungen führen.

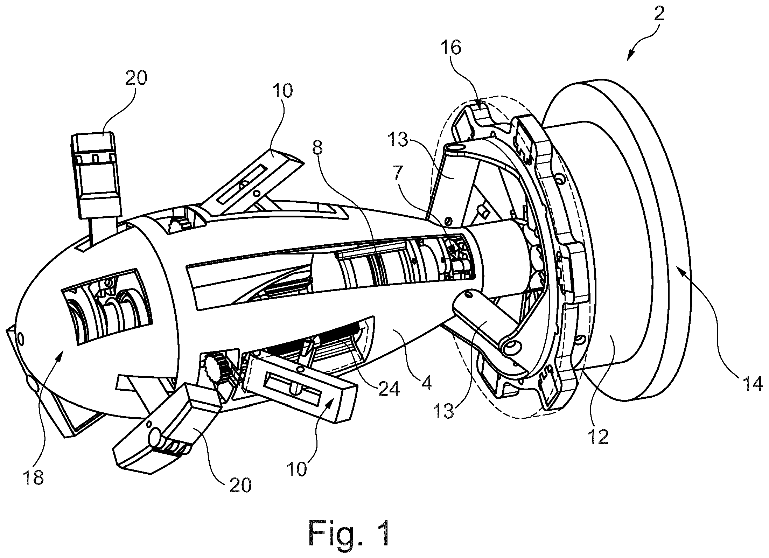

Fig. 1 zeigt einen erfindungsgemäßen Molch 2 umfassend einen Molchkörper 4 mit einem daran angeordneten Antriebselement 6. Das Antriebselement 6 ist von einem Mantelelement 12 umgeben, an dem eine Führungsscheibe 14 sowie eine Messplatte 16 angeordnet sind. Das Antriebselement 6 ist als Doppelpropeller ausgeführt, der über ein Getriebe 7 mit einer Generatoreinheit 8 verbunden ist. An dem dem Antriebselement 6 gegenüberliegenden Ende des Molchkörpers 4 weist der Molchkörper eine auswechselbare Arbeitseinheit 18 auf. An der Arbeitseinheit 18 ist eine Sensoranordnung mit drei Sensoren angebracht, die in dem Ausführungsbeispiel der Fig. 1 als EMAT-Sensoren ausgeführt sind. Der Molchkörper 4 weist Festlegemittel 10 auf, die als klappbare Elemente ausgeführt sind. Diese sind über einen mittels einer Getriebespindel 24 bewegbaren Hebel klappbar. Die Getriebespindel 24 erstreckt sich entlang der Längserstreckung des Molchkörpers 4. Hierdurch wird eine platzsparende Anordnung des Festlegemittels 10 erreicht.

Der Molchkörper 4 ist vorliegend rotationssymmetrisch und tropfenförmig ausgestaltet, was ihm eine strömungsgünstige Form verleiht. Der Molchkörper 4 weist einen geringeren Durchmesser als der Innendurchmesser einer Rohrleitung auf, in der ein erfindungsgemäßer Molch 2 zum Einsatz kommen soll. Ein in der Rohrleitung strömendes Fluid kann somit am Molchkörper 4 vorbeiströmen. Dies wird durch die strömungsgünstige, tropfenförmige Formgebung des Molchkörpers erleichtert. Weiterhin werden so die von dem strömenden Fluid auf dem Molch ausgeübten Kräfte reduziert. Die Belastungen der Festlegemittel 10 beziehungsweise der Rohrleitung an den Stellen, an den sie mit dem Festlegemittel 10 in Kontakt steht, werden reduziert.

In der vorliegenden Ausführungsform ist das Antriebselement 6 als Doppelpropeller ausgestaltet. Dieser ist über ein Getriebe 7 mit der Generatoreinheit 8 verbunden. Die Generatoreinheit 8 kann auch als Motor dienen, mit dem das Antriebselement 6 in Rotation versetzt wird. Bei der Verwendung eines Doppelpropellers als Antriebselement 6 kann über das Getriebe 7 erreicht werden, dass sich die durch die jeweiligen einzelnen Propeller in den Molch eingebrachten Drehmomente genau kompensieren. Die Orientierung des Molches 2 innerhalb einer Rohrleitung bleibt somit konstant. Die durch die Festlegemittel 10 aufzunehmenden Kräfte werden vermischt.

Das Mantelelement 12 ist über Halteelemente des Molchkörpers 4 mit diesem verbunden. An dem Mantelelement 12 sind eine Führungsscheibe 14 und eine Messplatte 16 angeordnet. Es können auch mehrere Führungsscheiben 14 und/oder mehrere Messplatten 16 vorgesehen sein. Es ist nicht zwingend notwendig, jedoch vorteilhaft, sowohl eine Führungsscheibe 14 als auch eine Messplatte 16 vorzusehen. Eine Messplatte 16 ist hierbei eine Führungsscheibe, die mit Sensoren ausgestattet ist. Über die Sensoren wird eine Verformung der Messplatte registriert. Dafür muss die Messplatte beim Betrieb des Molches innerhalb einer Rohrleitung an der Innenseite der Rohrleitung anliegen und somit den Molchkörper 4 in einem Querschnitt der Rohrleitung betrachtet in der Rohrleitung festlegen. Durch die Messplatte 16 können somit Abweichungen der inneren Geometrie der Rohrleitung festgestellt werden, wie sie beispielsweise durch Dellen oder Beulen oder auch Schweißnähte hervorgerufen sein können. Eine entsprechende Messplatte 16 kann somit Teil einer Positioniereinheit zur Positionierung des Molchs in der Pipeline sein. Über die Messplatte werden Umfangsschweißnähte erkannt. Derartige Schweißnähte verbinden einzelne Segmente einer Rohrleitung miteinander. Insbesondere bei Pipelines für die Öl- und Gasindustrie sind die einzelnen Segmente beziehungsweise die Schweißnähte, mit denen die Segmente verbunden sind, für jede Pipeline dokumentiert. Über die Schweißnahterkennung kann somit durch Abzählen der bereits überfahrenen Schweißnähte die Position des Molches innerhalb der Pipeline bestimmt werden.

Der erfindungsgemäße Molch nach Fig. 1 wird durch ein in einer Rohrleitung befindliches Fluid durch die Rohrleitung transportiert. Zum Abbremsen des Molches wird eine als Motor wirkende Generatoreinheit das Antriebselement in eine Drehrichtung antreiben, die ein Abbremsen des Molchs 2 in der Rohrleitung bewirkt. Das Abbremsen des Molchs 2 in der Rohrleitung erfolgt somit nahezu verschleißfrei. Wenn die Geschwindigkeit des Molchs 2 relativ zur Rohrleitung ausreichend gering ist, vorzugsweise wenn der Molch 2 relativ zur Rohrleitung stationär ist, werden die Festlegemittel 10 in Kontakt mit der Rohrleitung gebracht. Der erfindungsgemäße Molch 2 wird in der Rohrleitung verklemmt. Anschließend kann die Drehrichtung des Antriebselements 6 umgekehrt werden. Das Antriebselement 6 wird nun durch das am Molchkörper vorbei und/oder durch diesen hindurchtretende Fluid angetrieben. Diese Bewegungsenergie wird in der Generatoreinheit 8 in elektrische Energie umgewandelt, mit der beispielsweise ein wiederaufladbarer Energiespeicher geladen werden kann. Die Energie kann auch für den Betrieb der Sensoranordnungen verwendet werden. Dies ist besonders für eine Sensoranordnung interessant, die einen Sensor mit einem hohen Energiebedarf wie ein Röntgenfluoreszenzsensor und/oder eine Anordnung zur Durchführung AES aufweist. Dadurch, dass ein erfindungsgemäßer Molch 2 an einer bestimmten Stelle in der Pipeline verharrt, können auch zeitlich aufwendige Messungen durchgeführt werden. Alternativ kann der Molch, wenn er mit geeigneten Aktoren ausgestattet ist, Wartungs-, Reinigungs- oder Reparaturarbeiten in der Pipeline von innen durchführen.

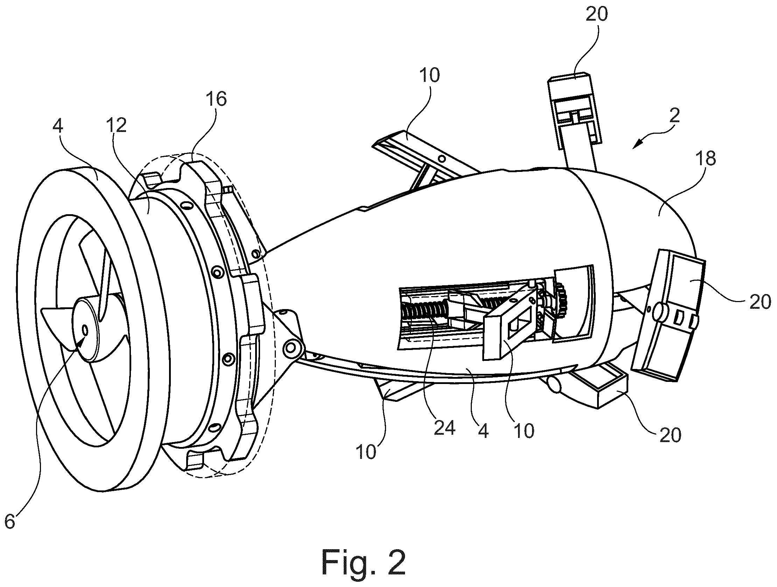

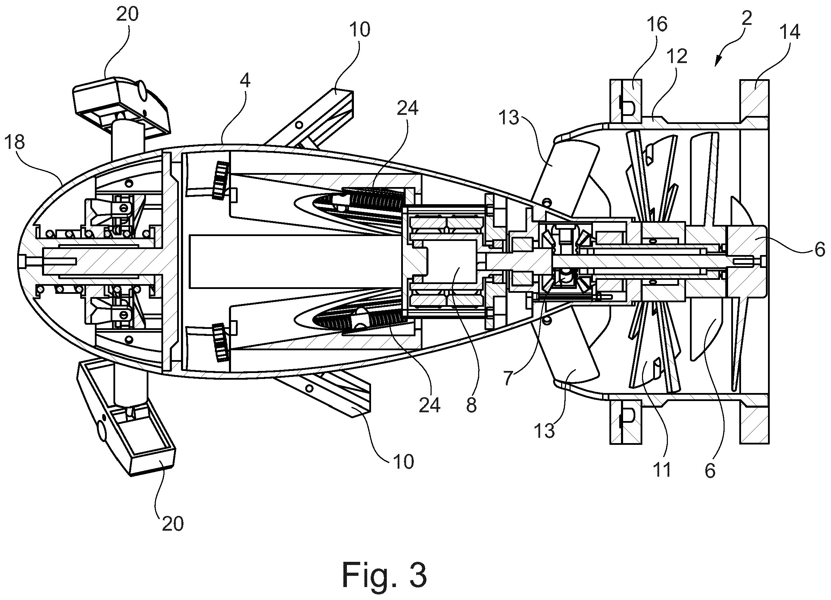

Fig. 2 lässt noch einmal das Antriebselement 6 mit dem Propeller erkennen, der von dem Mantelelement 12 umgeben ist. Auf dem Mantelelement 12 sind die Führungsscheibe 14 und Messplatte 16 angeordnet. Weiterhin ist der Hebel erkennbar, über den das Festlegemittel 10 geklappt wird. Der Hebel wird über eine Getriebespindel 24 bewegt. Vorzugsweise ist die Getriebespindel 24 selbsthemmend ausgeführt. Das Festlegemittel 10 verbleibt in dieser Ausführungsform in einer einmal eingenommenen Position, auch wenn Kräfte auf das Festlegemittel 10 wirken. Eine zusätzliche Bremse ist somit nicht notwendig, was die Komplexität des erfindungsgemäßen Molches verringert. Fig. 3 zeigt einen Querschnitt durch einen erfindungsgemäßen Molch 2. Erkennbar ist der zweigeteilte Molchkörper 4. Die auswechselbare Arbeitseinheit 18 ist an der dem Antriebselement 6 gegenüberliegenden Seite angeordnet. Sie erhöht die Flexibilität des Molches 2. Im Querschnitt sind wiederum die Festlegemittel 10 mit den Getriebespindeln 24 erkennbar. Die Getriebespindeln 24 erstrecken sich in Längsrichtung des Molches. Sie sind jedoch nicht parallel zu einer Längsmittelachse des Molches angeordnet. An die auch als Motor fungierende Motoreinheit 8 schließt sich ein Getriebe 7 an, über die die Motoreinheit 8 mit dem Antriebselement 6 verbunden ist. Bei der Verwendung eines einfachen Propellers kann ein derartiges Getriebe 7 gegebenenfalls entbehrlich sein. Der Doppelpropeller weist zwei gegenläufig rotierende Antriebselemente 6 auf, die durch eine Fluidströmung in Drehung versetzt werden können. Diese sind bei über das Getriebe 7 mit derselben Generatoreinheit 8 verbunden. Das Getriebe 7 bewirkt hierbei, dass die Propeller des Doppelpropellers gegenläufig rotieren. Weiterhin besorgt das Getriebe einen automatischen Ausgleich der durch die einzelnen Propeller eingeleiteten Drehmomente in den Molch, so dass der Molch nicht um seine Längsachse rotiert. Im vorliegenden Ausführungsbeispiel sind benachbart zum Doppelpropeller Leitschaufeln 11 angeordnet. Diese sind optional.

Das das Antriebselement 6 umgebende Mantelelement 12 ist über Halteelemente 13 mit dem Molchkörper 4 verbunden. Diese sind ebenfalls strömungsgünstig ausgeformt.

In dem Molchkörper 4 ist ein Hohlraum erkennbar, der für Aufnahme eines Energiespeichers, vorzugsweise eines wiederaufladbaren Energiespeichers, einer Steuerelektronik und/oder einer Auswerteeinheit geeignet ist.

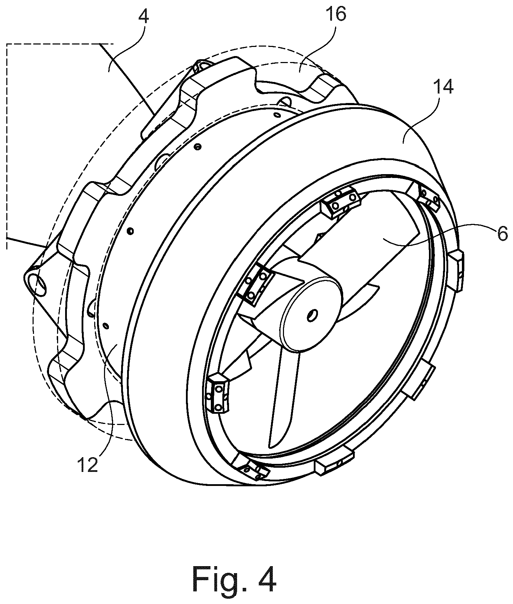

Fig. 4 zeigt einen Ausschnitt eines erfindungsgemäßen Molches, bei dem am Mantelelement neben der Messplatte 16 ein Dichtungscup statt einer Führungsscheibe 14 angeordnet ist. Dieser Dichtungscup entspricht in der Funktion der Führungsscheibe 14, ist jedoch etwas anders ausgeformt. Zusätzlich sind Sensoren gezeigt, die als vorausschauende Sensoren die Pipelinewand vor dem Molch 2 überwachen können.

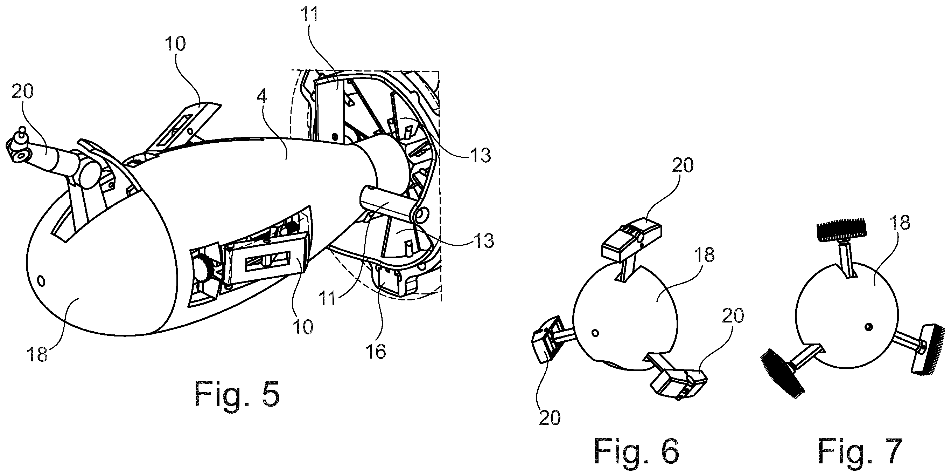

Fig. 5 zeigt einen Molch mit einer anderen Arbeitseinheit 18. Diese Arbeitseinheit 18 weist einen Manipulator 20 auf. Ein derartiger Molch kann zum Beispiel zum Durchführen von Wartungs- oder Reparaturarbeiten in einer Pipeline eingesetzt werden. Hierdurch können kleinere Wartungs- beziehungsweise Reparaturarbeiten durchgeführt werden, ohne eine Pipeline von außen zugänglich machen und öffnen zu müssen. Gegebenenfalls können die Arbeiten sogar durchgeführt werden, während weiterhin Fluid durch die Pipeline transportiert wird. Hierdurch sinken die Kosten für Wartungs- und Reparaturarbeiten deutlich.

Fig. 6 und Fig. 7 zeigen zwei weitere alternative Ausführungsbeispiele von Arbeitseinheiten 18. Fig. 6 weist die Arbeitseinheit einer Sensoranordnung 20 in Form von EMAT Sensoren auf. In Fig. 7 ist die Arbeitseinheit 18 mit Reinigungselementen in Form von Bürsten ausgestattet. Ein hiermit ausgestatteter Molch kann entsprechend zur Reinigung einer Rohrleitung eingesetzt werden.

## Patentansprüche

1. Molch (2) zur Verwendung in mit einem strömenden Fluid gefüllten Rohrleitungen, umfassend einen Molchkörper (4), ein an dem Molchkörper (4) angeordnetes, durch das strömende Fluid in Rotation versetzbares Antriebselement (6), vorzugsweise einen Propeller, eine mit dem Antriebselement (6) in Verbindung stehende Generator-Einheit (8), durch die eine Bewegung des Antriebselements (6) in elektrische Energie umwandelbar ist, ein Festlegemittel (10) über das die Position und/oder die Geschwindigkeit des Molches (2) in der Rohrleitung festlegbar ist, wobei die Generator-Einheit (8) zum Betrieb als Motor ausgebildet ist, über die das Antriebselement (6) in Rotation versetzbar und zum Einstellen einer von der Strömungsgeschwindigkeit des strömenden Fluids in der Rohrleitung verschiedenen Geschwindigkeit des Molches (2) ausgebildet ist und der Molch (2) einen mit der Generator-Einheit (8) verbunden Energiespeicher für elektrische Energie aufweist, **dadurch gekennzeichnet, dass** der Molch (2) eine auswechselbare Arbeitseinheit (18) aufweist, die den Molchkörper (4) zumindest mit ausbildet und über die der Molch (2) mit unterschiedlichen Sensoren und/oder Aktoren ausstattbar ist, wobei der Molch unterschiedliche auswechselbare Arbeitseinheiten umfasst, die unterschiedliche Sensoren aufweisen, so dass der Molch je nach Einsatzzweck mit unterschiedlichen Arbeitseinheiten ausstattbar ist, wobei es sich bei den Sensoren um einen Ultraschallsensor und/oder einen EMAT Sensor und/oder einen magnetischen Flusssensor handelt.

2. Molch nach Anspruch 1, **dadurch gekennzeichnet, dass** die Querschnittsflächen quer zu einer Längsmittelachse des Molchkörpers (4) im Bereich der jeweiligen Enden des Molchkörpers (4) kleiner sind als zumindest eine Querschnittsfläche in einem zwischen den Enden befindlichen Abschnitt des Molchkörpers (4).

3. Molch nach einem der vorhergehenden Ansprüche, **dadurch gekennzeichnet, dass** der Molch (2) ein zweites in Rotation versetzbares Antriebselement (6) aufweist, wobei das erste und das zweite Antriebselement (6) zum Betrieb mit gegenläufigen Drehrichtungen ausgebildet sind.

4. Molch nach Anspruch 3, **dadurch gekennzeichnet, dass** der Molch einen gegenläufigen Doppelpropeller aufweist.

5. Molch nach einem der vorhergehenden Ansprüche, **dadurch gekennzeichnet, dass** das Antriebselement (6) von einem Mantelelement (12) umgeben ist.

6. Molch nach Anspruch 5, **dadurch gekennzeichnet, dass** an dem Mantelelement (12) eine Führungsscheibe (14) angeordnet ist.

7. Molch nach Anspruch 5 oder 6, **dadurch gekennzeichnet, dass** an dem Mantelelement (12) eine Messplatte (16) angeordnet ist.

8. Molch nach einem der vorhergehenden Ansprüche, **dadurch gekennzeichnet, dass** das Festlegemittel (10) bei der Verwendung des Molches (2) in der Rohrleitung in Richtung der Rohrleitungswand bewegbar ist.

9. Molch nach einem der vorhergehenden Ansprüche, **dadurch gekennzeichnet, dass** das Festlegemittel (10) klappbar an dem Molchkörper (4) angeordnet ist.

10. Molch nach einem der vorhergehenden Ansprüche, **dadurch gekennzeichnet, dass** der Molch (2) mindestens zwei Festlegemittel (10) aufweist, die angeordnet sind eine Kraft in unterschiedliche Richtungen auf die Rohrleitungswand aufzubringen.

11. Molch nach einem der vorhergehenden Ansprüche, **dadurch gekennzeichnet, dass** der Molch (2) eine Getriebespindel (24) aufweist, über die das Festlegemittel (10) in Kontakt mit der Rohrleitung bringbar ist.

12. Molch nach Anspruch 11, **dadurch gekennzeichnet, dass** die Getriebespindel (24) selbsthemmend ist.

13. Molch nach einem der vorhergehenden Ansprüche, **dadurch gekennzeichnet, dass** der Molch (2) eine Positioniereinheit zur Positionierung des Molches (2) in einer Pipeline aufweist.

## Claims

1. Pig (2) for use in pipelines filled with a flowing fluid, comprising a pig body (4), a drive element (6), preferably a propeller, which is arranged on the pig body (4) and can be set in rotation by the flowing fluid, a generator unit (8) connected to the drive element (6) and by means of which a movement of the drive element (6) can be converted into electrical energy, and a fixing means (10) via which the position and/or the speed of the pig (2) in the pipeline can be fixed, wherein the generator unit (8) is designed for operation as a motor, via which generator unit the drive element (6) can be set in rotation and is designed to adjust a speed of the pig (2), which is different from the flow velocity of the fluid flowing in the pipeline, and the pig (2) has an energy store, connected to the generator unit (8), for electrical energy, **characterized in that** the pig (2) has a replaceable work unit (18) which at least partly forms the pig body (4) and via which the pig (2) can be equipped with different sensors and/or actuators, wherein the pig comprises different replaceable work units which have different sensors, so that the pig can be equipped with different work units depending on the intended use, wherein the sensors are an ultrasonic sensor and/or an EMAT sensor and/or a magnetic flux sensor.

2. Pig according to Claim 1, **characterized in that** the cross-sectional areas transverse to a longitudinal centre axis of the pig body (4) in the region of the respective ends of the pig body (4) are smaller than at least one cross-sectional area in a portion of the pig body (4) located between the ends.

3. Pig according to either of the preceding claims, **characterized in that** the pig (2) has a second drive element (6) which can be set in rotation, wherein the first and the second drive elements (6) are designed for operation with opposite directions of rotation.

4. Pig according to Claim 3, **characterized in that** the pig has a contra-rotating twin propeller.

5. Pig according to any one of the preceding claims, **characterized in that** the drive element (6) is surrounded by a casing element (12).

6. Pig according to Claim 5, **characterized in that** a guide disc (14) is arranged on the casing element (12).

7. Pig according to Claim 5 or 6, **characterized in that** a measurement plate (16) is arranged on the casing element (12).

8. Pig according to any one of the preceding claims, **characterized in that** the fixing means (10) can be moved in the direction of the pipeline wall when the pig (2) is used in the pipeline.

9. Pig according to any one of the preceding claims, **characterized in that** the fixing means (10) is arranged foldably on the pig body (4).

10. Pig according to any one of the preceding claims, **characterized in that** the pig (2) has at least two fixing means (10) which are arranged to apply a force to the pipeline wall in different directions.

11. Pig according to any one of the preceding claims, **characterized in that** the pig (2) has a gear spindle (24) via which the fixing means (10) can be brought into contact with the pipeline.

12. Pig according to Claim 11, **characterized in that** the gear spindle (24) is self-locking.

13. Pig according to any one of the preceding claims, **characterized in that** the pig (2) has a positioning unit for positioning the pig (2) in a pipeline.

## Revendications

1. Racleur (2) destiné à être utilisé dans des canalisations remplies d'un fluide en écoulement, comprenant un corps (4) de racleur, un élément d'entraînement (6), de préférence une hélice, disposé sur le corps (4) de racleur, pouvant être mis en rotation par le fluide en écoulement, une unité génératrice (8) reliée à l'élément d'entraînement (6), au moyen de laquelle un mouvement de l'élément d'entraînement (6) peut être converti en énergie électrique, un moyen de fixation (10) qui permet de fixer la position et/ou la vitesse du racleur (2) dans la canalisation, l'unité génératrice (8) étant conçue pour fonctionner en tant que moteur, au moyen de laquelle l'élément d'entraînement (6) peut être mis en rotation et qui est conçu pour régler une vitesse du racleur (2) différente de la vitesse d'écoulement du fluide en écoulement dans la canalisation, et le racleur (2) comportant un accumulateur d'énergie électrique relié à l'unité génératrice (8), **caractérisé en ce que** le racleur (2) comporte une unité de travail (18) remplaçable qui forme au moins en partie le corps (4) de racleur et au moyen de laquelle le racleur (2) peut être équipé de différents capteurs et/ou actionneurs, le racleur comprenant différentes unités de travail remplaçables qui comportent différents capteurs, de telle sorte que le racleur peut être équipé de différentes unités de travail en fonction de l'usage prévu, les capteurs étant un capteur à ultrasons et/ou un capteur EMAT et/ou un capteur de flux magnétique.

2. Racleur selon la revendication 1, **caractérisé en ce que** les surfaces de section transversalement à un axe central longitudinal du corps (4) de racleur, dans la zone des extrémités respectives du corps (4) de racleur, sont inférieures à au moins une surface de section transversale dans un tronçon du corps (4) de racleur situé entre les extrémités.

3. Racleur selon l'une quelconque des revendications précédentes, **caractérisé en ce que** le racleur (2) comporte un deuxième élément d'entraînement (6) pouvant être mis en rotation, le premier et le deuxième élément d'entraînement (6) étant conçus pour fonctionner avec des sens de rotation opposés.

4. Racleur selon la revendication 3, **caractérisé en ce que** le racleur comporte une double hélice contrarotative.

5. Racleur selon l'une quelconque des revendications précédentes, **caractérisé en ce que** l'élément d'entraînement (6) est entouré par un élément enveloppant (12).

6. Racleur selon la revendication 5, **caractérisé en ce qu'**un disque de guidage (14) est disposée sur l'élément enveloppant (12).

7. Racleur selon la revendication 5 ou 6, **caractérisé en ce qu'**une plaque de mesure (16) est disposée sur l'élément enveloppant (12).

8. Racleur selon l'une quelconque des revendications précédentes, **caractérisé en ce que** le moyen de fixation (10) peut être déplacé en direction de la paroi de la canalisation lors de l'utilisation du racleur (2) dans la canalisation.

9. Racleur selon l'une quelconque des revendications précédentes, **caractérisé en ce que** le moyen de fixation (10) est disposé de manière rabattable sur le corps (4) de racleur.

10. Racleur selon l'une quelconque des revendications précédentes, **caractérisé en ce que** le racleur (2) comporte au moins deux moyens de fixation (10), qui sont disposés pour appliquer sur la paroi de la canalisation une force dans différentes directions.

11. Racleur selon l'une quelconque des revendications précédentes, **caractérisé en ce que** le racleur (2) comporte une broche d'engrenage (24), qui permet d'amener le moyen de fixation (10) en contact avec la canalisation.

12. Racleur selon la revendication 11, **caractérisé en ce que** la broche d'engrenage (24) est autobloquante.

13. Racleur selon l'une quelconque des revendications précédentes, **caractérisé en ce que** le racleur (2) comporte une unité de positionnement pour positionner le racleur (2) dans un pipeline.
